# FASCICULE DE BREVET EUROPEEN

(11) **EP 0 336 825 B1**
(45) Date de publication et mention de la délivrance du brevet: **07.12.1994**
(21) Numéro de dépôt: 89400900.0
(22) Date de dépôt: 31.03.1989
(51) Int. Cl.: C04B 28/26, C09K 17/00

(54) **Produit d'injection pour l'étanchéification et/ou la consolidation pour sols et matériaux de construction et procédé pour sa mise en oeuvre**
Injiziermittel zum Abdichten und/oder Konsolidieren von Erdboden und Baumaterialien und Verfahren zur Durchführung
Injectable product for sealing and/or consolidating ground and constructional material and operation process

(30) Priorité: 01.04.1988 FR 8804363
(43) Date de publication de la demande: 11.10.1989
(73) Titulaire: SOLETANCHE, F-92005 Nanterre (FR)
(72) Inventeur: Gouvenot, Daniel, F-92110 Clichy (FR)
(74) Mandataire: Stalla-Bourdillon, Bernard

(56) Documents cités:
- FR-A- 2 127 741
- FR-A- 2 528 441
- CHEMICAL ABSTRACTS, vol. 106, no. 16, avril 1987, page 344, abstract no.125079w, Columbus, Ohio, US; &JP-A-61 283 683 (KYOWA KAIHATSU K.K.) 13-12-1986

## Description

La présente invention se rapporte à un produit d'injection pour l'étanchéification et/ou la consolidation de sols et matériaux de contruction tels que mortiers, liants, maçonneries, bétons, etc... présentant des fissures ou des vides plus ou moins profonds susceptibles d'entraîner une certaine porosité et donc un manque d'étanchéité.

La présente invention a également pour objet un procédé de mise en oeuvre d'un tel produit d'injection en vue d'améliorer l'étanchéité et/ou de consolider de tels sols et matériaux de construction.

Plus particulièrement, la présente invention est destinée au traitement de matériaux et de sols particulièrement fins ou très fins en vue de modifier leur consistance.

Il est de pratique courante d'utiliser pour étanchéifier et/ou consolider les sols et matériaux, des produits d'étanchéification et/ou de consolidation encore appelés "coulis" à base de ciment lorsque les pores sont plus ou moins larges ou encore à base de gel de silice, obtenu par gélification d'un silicate de soude, lorsque les pores sont particulièrement fins.

Cette dernière classe de coulis peut cependant présenter l'inconvénient de provoquer une certaine pollution du sol, notamment au niveau des nappes phréatiques et d'assurer également une mauvaise pérennité du fait que la structure des gels obtenus risque de ne pas être stable dans le temps. Ce phénomène connu sous le nom de synérèse peut être très préjudiciable aux gels obtenus à l'aide de solutions de silicate.

En vue de remédier aux inconvénients de ces coulis d'injection, il a été proposé dans le brevet français FR-A-2528441 un coulis d'injection notamment pour micro-pores et micro-fissures se présentant sous forme d'une liqueur de silice, non colloïdale, obtenue par dissolution, à température ambiante, de silice ayant un diamètre moyen de particules inférieur à 100µm dans de la soude, le rapport SiO₂/Na₂O étant inférieur à 2 et la teneur en silice de la solution étant de préférence supérieure à environ 20% en poids.

Ce type de coulis a une très grande réactivité vis-à-vis de la chaux, présente dans les matériaux de construction et certains sols, et conduit donc à une minéralisation des sols et/ou des matériaux de construction par formation de silicates de chaux hydratés, stables et insolubles, assurant ainsi la pérennité du traitement exercé sur ces sols et matériaux.

Ces coulis présentent toutefois certains inconvénients dans la mesure où les temps de prise se sont avérés être particulièrement sensibles aux conditions de température ainsi qu'aux concentrations des différents produits en présence.

Pour certaines applications, il est en effet particulièrement important de pouvoir disposer de coulis ayant des temps de prise constants et réglables.

En effet lorsque le lieu d'injection est éloigné du lieu de préparation du coulis, il est important de pouvoir disposer de coulis susceptibles d'avoir des temps de prise variables mais constants, ceci de façon à permettre d'assurer une bonne reproductibilité des opérations d'injection.

Dans le brevet français FR-A-2127741 il a été proposé, en vue de faire varier les temps de gélification, de remplacer une partie du ciment d'un coulis d'injection, comprenant du silicate de sodium ou une solution aqueuse de silicate de sodium et une pâte de ciment, par une substance minérale possédant des propriétés hydrauliques latentes telle que par exemple un laitier granulé fin.

Si l'addition de laitier permet effectivement d'influer sur le temps de gélification, celui-ci est encore trop rapide même avec de fortes concentrations en laitier. Par ailleurs, ce type de coulis à base de silicate de sodium présente déjà au temps t = O une viscosité élevée (>15 Cps) ne permettant pas son injection dans des sols très fins tels que des sables du type Fontainebleau.

La présente invention permet de remédier aux inconvénients des coulis connus et propose donc un produit d'étanchéification et/ou de consolidation pour sols et matériaux de construction présentant un temps de prise stable et réglable et ayant par ailleurs une viscosité appropriée permettant une bonne pénétrabilité dans les sols fins ou très fins ainsi que dans les fissures et micro-fissures de matériaux de construction.

Par durcissement, les coulis selon l'invention conduisent à une minéralisation par formation de silicates de chaux hydratés stables et insolubles assurant ainsi la pérennité des sols et matériaux traités.

La présente invention a donc pour objet un produit d'étanchéification et/ou de consolidation pour sols et matériaux de construction, utilisable par injection, ce produit étant obtenu par mélange d'un composé de laitier en suspension dans l'eau et d'une liqueur de silice, ladite liqueur de silice présentant un rapport en poids SiO₂/Na₂O inférieur à 2 et une teneur en silice supérieure à environ 10% en poids et de préférence à 20 % en poids.

De façon tout à fait surprenante et inattendue, on a constaté que selon l'invention, l'addition de laitier au coulis selon le brevet français FR-A-2528441 conduisait à des temps de prise supérieurs à environ 1 heure alors que le coulis selon le brevet français FR-A-2127741 avait des temps de gélification de quelques minutes et en tout cas inférieurs à 1 heure.

Une telle différence dans les réactivités était tout à fait imprévisible dans la mesure où il est bien connu que les coulis à base de liqueur de silice présentent une réactivité beaucoup plus grande que les coulis à base de silicate de sodium.

Le produit d'étanchéification et/ou de consolidation selon l'invention a de préférence une viscosité à t = O généralement comprise entre 4 et 6 centipoises (Cps).

Le composé de laitier doit être de préférence du type basique et présenter un rapport en poids 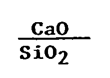
compris entre 1,10 et 1,35.

On utilise de préférence selon l'invention un laitier de haut fourneau présentant une composition chimique pondérale suivante :

| | |
|---|---|
| SiO₂ | 33 à 40 % |
| Al₂O₃ | 8 à 16 % |
| CaO | 40 à 45 % |

le reste étant constitué de MgO, Fe₂O₃, K₂O, Na₂O, S⁻⁻, MnO, TiO₂ et d'autres traces d'éléments mineurs.

La granulométrie du laitier présente une certaine importance dans la mesure où le diamètre moyen des particules doit être inférieur aux pores et micro-fissures qui doivent être injectés par le coulis.

Dans la pratique le diamètre des particules de laitier est généralement compris entre 0 et 120µm ce qui correspond à une surface spécifique Blaine de 3.000 à 4.000 cm2/g.

Pour des injections de pores et micro-fissures particulièrement fins, le laitier peut se présenter sous forme de particules très fines ayant une surface spécifique Blaine d'environ 10.000cm2/g.

Comme composé de laitier on peut également utiliser selon l'invention un ciment à base de laitier dont le pourcentage en laitier est supérieur à 60% en poids et en particulier les ciments du type CLK 45 qui sont des ciments de laitier au clinker contenant plus de 80% en poids de laitier.

La liqueur de silice qui est ajoutée au laitier a pour effet de catalyser les réactions de prise et de durcissement.

Cette liqueur est obtenue par dissolution, à température ambiante, de silice, de préférence d'un diamètre moyen de particules inférieur à 100µm dans de la soude, le rapport SiO₂/Na₂O devant être, comme indiqué ci-dessus, inférieur à 2 mais de préférence compris entre 1,5 et 1,8.

La silice utilisée peut être de la silice à l'état pure ou de préférence des produits siliceux contenant au moins 80 à 90% en poids de SiO₂ de structure non vitreuse.

Parmi les composés préférés, on peut en particulier citer les silices pyrogéniques également dénommées silices fumées qui proviennent de déchets industriels, le kieselguhr, la gaize ou encore les aérogels de silice.

La granulométrie de la silice en vue d'obtenir une bonne dissolution rapide et complète dans la soude doit être inférieure à 100µm et de préférence à 50µm.

La soude utilisée pour la dissolution de la silice se présente de préférence sous forme d'une solution comprise entre 35 et 37°B c'est-à-dire ayant une densité comprise entre environ 1,32 et 1,35.

La quantité de liqueur de silice peut être variable mais elle est généralement comprise pour 100kg du composé de laitier entre 20 et 80 litres.

Les études qui ont été réalisées ont permis de montrer que plus la quantité de liqueur de silice, par rapport au composé de laitier, était élevée, plus le temps de prise était rapide.

Ainsi on a noté un temps de prise d'une heure pour un coulis contenant pour 100kg de laitier de haut fourneau, 45 litres de liqueur de silice et un temps de prise d'environ 2 heures pour un coulis contenant pour 100kg de laitier, 35 litres de liqueur de silice.

La quantité d'eau du coulis selon l'invention pour la mise en suspension des particules du composé de laitier est fonction de la résistance et de la viscosité que l'on souhaite obtenir.

Cette quantité d'eau est généralement comprise pour 100kg du composé de laitier entre 200 et 1.000 litres et de préférence entre 500 et 800 litres.

Selon une forme de réalisation préférée de l'invention, le coulis peut également contenir de la poudre de carbonate de calcium pouvant provenir du broyage d'un marbre, d'un calcaire ou de calcite.

Cette charge de carbonate de calcium est particulièrement recommandée pour les traitements de certains sols et/ou matériaux pauvres en chaux.

Selon cette forme de réalisation, la liqueur de silice réagit avec les ions Ca ++ qui se libèrent progressivement par hydrolyse, pour former des silicates de chaux hydratés insolubles et stables.

La présence de poudre de carbonate de calcium permet par ailleurs de régler la viscosité et la résistance du coulis.

On peut également, si nécessaire, rajouter de la chaux vive ou éteinte pour régler le temps de durcissement.

En effet pour certaines applications, il est particulièrement important d'avoir des temps de durcissement les plus courts possible notamment dans les sols présentant des écoulements rapides.

La présente invention a également pour object un procédé d'étanchéification et/ou de consolidation, ce procédé consistant à injecter sous pression le coulis selon l'invention, tel que défini ci-dessus, dans des pores ou micro-fissures de sols ou de matériaux de construction, à l'aide d'appareils d'injection conventionnels.

Le procédé selon l'invention est tout particulièrement destiné au traitement des sols à étancher ou à consolider, qu'il s'agisse de roches fissurées ou d'alluvions.

La pression d'injection est généralement comprise entre 5 et 20 bars et la quantité de coulis entre 2 et 40% du volume du sol que l'on envisage de traiter.

Lors des travaux d'étanchéification, le traitement peut être contrôlé par prélèvement d'un échantillon que l'on soumet à des mesures de perméabilité.

Dans le but de mieux faire comprendre l'invention, on va maintenant décrire à titre d'illustration et sans aucun caractère limitatif plusieurs exemples de réalisation et de mise en oeuvre du coulis selon l'invention.

### EXEMPLE 1

Pour réaliser l'étanchéification par injection d'un sable fin, on prépare tout d'abord une suspension de 145kg de laitier de haut fourneau 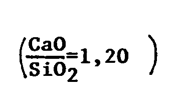
ayant un diamètre moyen de particules de 10µm dans 1.000 litres d'eau. A cette suspension, on ajoute ensuite 90kg de chaux éteinte et 60 litres d'une liqueur de silice obtenue de la façon suivante:
- 170kg de silice de granulométrie moyenne d'environ 50µm sont dissous dans 300 litres de soude à 36°B et 70 litres d'eau. On note une légère exothermicité lors de la dissolution (les caractéristiques de la solution après formation étaient les suivantes: rapport SiO₂/Na₂O = 1,8%; SiO₂=26,6%; Na₂O = 14,8%; H₂O= 58,6%; viscosité: 40-50cP.)

Le coulis ainsi obtenu a une viscosité (t = O) de 5 Cps et un temps de prise de 1h30 et un temps de durcissement de 4 heures.

Ce coulis est alors injecté sous pression selon les techniques conventionnelles par l'intermédiaire d'un tube d'injection introduit par forage. Lorsque la pression de reflux est stabilisée à environ 10 bars, l'injection est arrêtée.

Une mesure de perméabilité permet de constater une parfaite étanchéification du sol ainsi traité.

### EXEMPLE 2

On procède comme indiqué à l'exemple 1, mais avec une quantité de liqueur de silice de 100 litres. Dans ce cas on a constaté que le temps de prise était de 1 heure et le temps de durcissement de 4 heures.

### EXEMPLE 3

On procède comme à l'exemple 1 mais en utilisant un coulis obtenu par mise en suspension de 300kg de laitier de haut fourneau dans 1.000 litres d'eau et addition de 180 litres de la même liqueur de silice.

Le temps de prise de ce coulis a été de 2 heures.

### EXEMPLE 4

On procède comme à l'exemple 1 mais en utilisant un coulis obtenu par mise en suspension de 150kg de ciment CLK 45 dans 1.000 litres d'eau et addition de 100 litres de la même liqueur de silice.

Le temps de prise de ce coulis a été de 1 heure.

## Revendications

1. Produit d'étanchéification et/ou de consolidation pour sols et matériaux de construction, utilisable par injection, caractérisé par le fait qu'il est obtenu par mélange d'un composé de laitier en suspension dans l'eau et d'une liqueur de silice présentant un rapport en poids SiO₂/Na₂O inférieur à 2 et une teneur en silice supérieure à environ 10% en poids.

2. Produit selon la revendication 1, caractérisé par le fait que le composé de laitier est du type basique et présente un rapport en poids 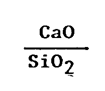 compris entre 1,10 et 1,35.

3. Produit selon l'une des revendications 1 ou 2 caractérisé par le fait que le composé de laitier est du laitier basique de haut fourneau dont le diamètre des particules est inférieur à 120µm.

4. Produit selon l'une des revendications 1 ou 2 caractérisé par le fait que le composé de laitier est un ciment du type CLK contenant plus de 80% en poids de laitier de haut fourneau.

5. Produit selon la revendication 1, caractérisé par le fait que la liqueur de silice est obtenue par dissolution de silice d'un diamètre moyen de particules inférieur à 100µm dans de la soude, le rapport en poids SiO₂/Na₂O étant de préférence compris entre 1,5 et 1,8.

6. Produit selon l'une quelconque des revendications 1 à 5 caractérisé par le fait que la quantité de liqueur de silice pour 100kg de composé de laitier est comprise entre 20 et 80 litres.

7. Produit selon l'une quelconque des revendications 1 à 6, caractérisé par le fait que la quantité d'eau pour la mise en suspension du composé de laitier est comprise, pour 100 kg du composé de laitier, entre 200 et 1.000 litres.

8. Produit selon l'une quelconque des revendications 1 à 7, caractérisé par le fait qu'il contient en outre de la poudre de carbonate de calcium.

9. Procédé d'étanchéification et/ou de consolidation de sols et matériaux de construction, caractérisé par le fait qu'il consiste à injecter sous pression, selon les techniques conventionnelles, un produit selon l'une quelconque des revendications 1 à 8.

## Claims

1. Product for rendering impervious and/or hardening soils and construction materials, usable by injection, characterized in that it is obtained by mixture of a slag compound in suspension in water and a silica liquor with an SiO₂/Na₂O weight ratio of less than 2 and a silica content greater than approximately 10% in weight.

2. Product according to Claim 1, characterized in that the slag compound is alkaline and has a CaO/SiO₂ weight between 1.10 and 1.35.

3. Product according one of Claims 1 or 2, characterized in that the slag compound is alkaline blast furnace slag with a particle diameter of less than 120 µm.

4. Product according to one of Claims 1 or 2, characterized in that the slag compound is a CLK type cement containing over 80% blast furnace slag.

5. Product according to Claim 1, characterized in that the silica liquor is obtained by dissolution of silica with a mean particle diameter of less than 100 µm in soda, the SiO₂/Na₂O weight ratio being preferably between 1.5 and 1.8.

6. Product according to any of Claims 1 to 5, characterized in that the quantity of silica liquor per 100 kg slag compound is between 20 and 80 litres.

7. Product according to any of Claims 1 to 6, characterized in that the quantity of water for the suspension of the slag compound is between 200 and 1,000 litres for 100 kg slag compound.

8. Product according to any of Claims 1 to 7, characterized in that it also contains calcium carbonate powder.

9. Process of rendering impervious and/or hardening soils and construction materials, characterized in that it consists of injecting under pressure, using conventional techniques, a product according to any of Claims 1 to 8.

## Patentansprüche

1. Einspritzbares Abdichtungs- und/oder Verfestigungsmittel für Böden und Baustoffe, **dadurch gekennzeichnet,** daß es durch Vermischen einer in Wasser in Suspension befindlichen Schlackenzusammensetzung und eines Wäßrigen Siliciumdioxidansatzes mit einem SiO₂/Na₂O-Verhältnis kleiner als 2 und einem Siliciumdioxidgehalt von über circa 10 Gew.-% gewonnen wird.

2. Mittel nach Anspruch 1, **dadurch gekennzeichnet,** daß die Schlackenzusammensetzung basisch ist und ihr CaO/SiO₂-Verhältnis zwischen 1,10 und 1,35 liegt.

3. Mittel nach einem der Ansprüche 1 oder 2, **dadurch gekennzeichnet,** daß die Schlackenzusammensetzung eine basische Hochofenschlacke ist, deren Teilchendurchmesser geringer als 120 µm ist.

4. Mittel nach Anspruch 1, **dadurch gekennzeichnet,** daß die Schlackenzusammensetzung ein Klinker-Schlacken-Zement mit über 80 Gew.-% Hochofenschlacke ist.

5. Mittel nach Anspruch 1, **dadurch gekennzeichnet,** daß der Siliciumdioxidansatz durch Auflösung von Siliciumdioxid mit einem Teilchendurchmesser, der geringer als 100 µm ist, in Soda gewonnen wird, wobei das SiO₂/Na₂O-Verhältnis vorzugsweise zwischen 1,5 und 1,8 liegt.

6. Mittel nach einem der Ansprüche 1 bis 5, **dadurch gekennzeichnet,** daß die Menge des Siliciumdioxidansatzes für 100 kg Schlackenzusammensetzung zwischen 20 und 80 Liter beträgt.

7. Mittel nach einem der Ansprüche 1 bis 6, **dadurch gekennzeichnet,** daß die für das Aufschwemmen der Schlackenzusammensetzung verwendete Wassermenge für 100 kg Schlackenzusammensetzung zwischen 200 und 1.000 Liter beträgt.

8. Mittel nach einem der Ansprüche 1 bis 7, **dadurch gekennzeichnet,** daß es außerdem Calciumcarbonatpulver enthält.

9. Verfahren zur Abdichtung und/oder Verfestigung von Böden und Baustoffen, **dadurch gekennzeichnet,** daß es darin besteht, ein Mittel nach einem der vorgenannten Ansprüche 1 bis 8 entsprechend den klassischen Techniken einzuspritzen.
